# EUROPEAN PATENT APPLICATION

(11) **EP 4 432 508 A1**
(43) Date of publication of application: **18.09.2024**
(21) Application number: 23856198.9
(22) Date of filing: 12.06.2023
(51) Int. Cl.: H02J 3/38, H02M 7/42, H02M 1/32

(54) **PHOTOVOLTAIC INVERTER AND CONTROL METHOD AND APPARATUS THEREFOR, AND READABLE STORAGE MEDIUM**

(30) Priority: 23.08.2022 CN 202211013579
(71) Applicant: Altenergy Power System Inc., Jiaxing, Zhejiang 314050 (CN)
(72) Inventor: LUO, Yuhao, Jiaxing, Zhejiang 314050 (CN); WU, Guoliang, Jiaxing, Zhejiang 314050 (CN); QI, Biaojie, Jiaxing, Zhejiang 314050 (CN); YANG, Yongchun, Jiaxing, Zhejiang 314050 (CN)
(74) Representative: Müller Schupfner & Partner Patent- und Rechtsanwaltspartnerschaft mbB (Muc)
(86) International application number: PCT/CN2023/099593
(87) International publication number: WO 2024/041106

(57) **Abstract**

A photovoltaic inverter and a control method and apparatus therefor, and a readable storage medium, which relate to the technical field of information. The control method is applied to a multi-channel photovoltaic inverter. Separate power limitation is simultaneously performed on the power of the whole machine of the inverter and the power of each channel of the inverter, such that there is no need to fix the operation power of a single channel, and it is only necessary to determine whether the operation power exceeds a safety range. Compared with previous control methods for a photovoltaic inverter, when the same input energy is acquired, the maximum power that matches the whole machine is acquired first, such that the whole machine is prevented from being damaged; and each photovoltaic module performs corresponding energy acquisition at an adjustable maximum power, thereby ensuring the full utilization of energy, such that a higher working power can be provided while the safety of the inverter and modules is ensured.

## Description

The present application claims priority to Chinese Patent Application No. 202211013579.6, titled "PHOTOVOLTAIC INVERTER AND CONTROL METHOD AND APPARATUS THEREFOR, AND READABLE STORAGE MEDIUM", filed on August 23, 2022 with the China National Intellectual Property Administration, which is incorporated herein by reference in its entirety.

### FIELD

The present disclosure relates to the field of information technology, and in particular to a photovoltaic inverter, a method and a device for controlling the photovoltaic inverter, and a readable storage medium.

### BACKGROUND

In recent years, with the development of electronic technology, a power of a micro inverter is limited by a maximum power, to ensure reliability of products and meet requirements of power grids. In a case that the micro inverter is connected to multiple branches of modules, a power of the module in each of the branches is limited by a same maximum power, to ensure a total maximum power within a safety range. The maximum power of each of the branches is obtained by dividing a maximum power Pm_all of the photovoltaic inverter by a total number N of the branches, i.e., Pm_in=Pm_all/N. For each of the branches, a maximum power point is limited to Pm_in. Usually, the maximum power of the photovoltaic inverter depends on an alternating current conversion circuit, the maximum power of each branch depends on a direct current conversion circuit, and a total maximum power that can be withstood by the direct current conversion circuit is greater than the maximum power that can be withstood by the alternating current conversion circuit.

The power of the conventional micro inverter is limited by the maximum power to ensure reliability of products and meet requirements of power grids. In a case that the micro inverter is connected to multiple modules, the power of each of the branches is limited by the maximum power Pm_in, or alternating current conversion power is limited, to ensure that the power of the photovoltaic inverter is limited by the maximum power Pm_all. Pm_in is obtained by dividing Pm_all by the total number N of the branches, i.e., Pm_in=Pm_all/N. In a case that the multiple modules are different in power, if a power of the photovoltaic inverter is limited by the maximum power of a single branch, the photovoltaic inverter always fails to operate at a maximum power; and if the power of the photovoltaic inverter is limited by the alternating current conversion power, when a power of one branch is very low, a power of another branch may exceed a safety threshold, resulting in damage to the circuit.

In view of the above problems, a problem to be solved urgently by those skilled in the art is to provide a method for controlling a photovoltaic inverter to ensure an operating power and safety.

### SUMMARY

An objective of the present disclosure is to provide a method for controlling a photovoltaic inverter to solve the problem described as follows. In a case that the multiple modules are different in power, if a power of the photovoltaic inverter is limited by the maximum power of a single branch, the photovoltaic inverter always fails to operate at a maximum power; and if the power of the photovoltaic inverter is limited by the alternating current conversion circuit, when a power of one branch is very low, a power of another branch may exceed a safety threshold, resulting in damage to the circuit.

In order to solve above technical problems, a method for controlling a photovoltaic inverter is provided according to the present disclosure. The method is applied to a photovoltaic inverter including multiple branches. The method includes: acquiring a maximum power of the photovoltaic inverter and a branch maximum power of each of the multiple branches in the photovoltaic inverter; measuring a current operating power of the photovoltaic inverter and determining whether the current operating power of the photovoltaic inverter is greater than the maximum power of the photovoltaic inverter; modifying the current operating power of the photovoltaic inverter to the maximum power of the photovoltaic inverter, and returning to the step of measuring a current operating power of the photovoltaic inverter and determining whether the current operating power of the photovoltaic inverter is greater than the maximum power of the photovoltaic inverter, if the current operating power of the photovoltaic inverter is greater than the maximum power of the photovoltaic inverter; or, measuring a current operating power of each photovoltaic module and determining whether the current operating power of the each photovoltaic module is greater than the branch maximum power, if the current operating power of the photovoltaic inverter is less than the maximum power of the photovoltaic inverter; and modifying the current operating power of the each photovoltaic module to the branch maximum power if the current operating power of the each photovoltaic module is greater than the branch maximum power; or, controlling the current operating power of the each photovoltaic module to remain unchanged if the current operating power of the each photovoltaic module is less than or equal to the branch maximum power.

Preferably, the modifying the current operating power of the each photovoltaic module to the branch maximum power includes: acquiring energy generated by the photovoltaic module and calculating a current maximum power; and modifying a current outputted by the photovoltaic module to limit the energy outputted by the photovoltaic module and measuring the energy in a real time manner, until the time that the energy is less than a threshold.

Preferably, the modifying the current operating power of the photovoltaic inverter to the maximum power of the photovoltaic inverter includes: acquiring energy inputted by photovoltaic modules and reducing the inputted energy to an energy threshold, where the energy threshold is preset and ensures normal operation of the photovoltaic inverter.

Preferably, the photovoltaic modules transmit the energy generated by the photovoltaic effect to a power grid connected to the photovoltaic inverter through conversion between direct current and alternating current.

Preferably, the maximum power of the photovoltaic inverter, a rated maximum power, the current operating power of the photovoltaic module and the current operating power of the photovoltaic inverter are measured and calculated by an MCU.

Preferably, the method further includes: triggering an alarm when the current operating power of the photovoltaic inverter is greater than the maximum power of the photovoltaic inverter.

Preferably, the method further includes: triggering an alarm when the current operating power of the photovoltaic module in one of the multiple branches is greater than the branch maximum power.

In order to solve above problems, a photovoltaic inverter is further provided according to the present disclosure. The photovoltaic inverter includes a control module, multiple direct current conversion circuits and an alternating current conversion circuit. The control module is connected to the multiple direct current conversion circuits and the alternating current conversion circuit, and is configured to: acquire a maximum power of the photovoltaic inverter and a branch maximum power of each of branches in the photovoltaic inverter; measure a current operating power of the photovoltaic inverter and determine whether the current operating power of the photovoltaic inverter is greater than the maximum power of the photovoltaic inverter; modify the current operating power of the photovoltaic inverter to the maximum power of the photovoltaic inverter, and trigger functions of measuring a current operating power of the photovoltaic inverter and determining whether the current operating power of the photovoltaic inverter is greater than the maximum power of the photovoltaic inverter, if the current operating power of the photovoltaic inverter is greater than the maximum power of the photovoltaic inverter; or, measure a current operating power of each photovoltaic module and determine whether the current operating power of the each photovoltaic module is greater than the branch maximum power, if the current operating power of the photovoltaic inverter is less than the maximum power of the photovoltaic inverter; and reduce the current operating power of the each photovoltaic module to the branch maximum power if the current operating power of the each photovoltaic module is greater than the branch maximum power; or, control the current operating power of the each photovoltaic module to remain unchanged if the current operating power of the each photovoltaic module is less than or equal to the branch maximum power. The number of the multiple direct current conversion circuits is equal to the number of the photovoltaic modules. The direct current conversion circuits are configured to convert energy from the photovoltaic modules into direct current power. The alternating current conversion circuit is connected to the direct current conversion circuits and is configured to convert the direct current power from the direct current conversion circuits into alternating current power and transmit the alternating current power to a power grid. All components in the direct current conversion circuits and the alternating current conversion circuit have a maximum allowed power greater than a rated power matching the current operating power of the photovoltaic inverter.

In order to solve the above technical problems, a device for controlling a photovoltaic inverter is further provided according to the present disclosure. The device includes an acquisition module, a measurement module, a modification module, a determination module, a maximum modification module and a remaining module. The acquisition module is configured to acquire a maximum power of the photovoltaic inverter and a branch maximum power of each of branches in the photovoltaic inverter. The measurement module is configured to measure a current operating power of the photovoltaic inverter, determine whether the current operating power of the photovoltaic inverter is greater than the maximum power of the photovoltaic inverter, and trigger the modification module if the current operating power of the photovoltaic inverter is greater than the maximum power of the photovoltaic inverter; or, trigger the determination module if the current operating power of the photovoltaic inverter is less than or equal to the maximum power of the photovoltaic inverter. The modification module is configured to modify the current operating power of the photovoltaic inverter to the maximum power of the photovoltaic inverter, and trigger the measurement module. The determination module is configured to measure a current operating power of each photovoltaic module and determine whether the current operating power of the each photovoltaic module is greater than the branch maximum power, and trigger the maximum modification module if the current operating power of the each photovoltaic module is greater than the branch maximum power; or, trigger the remaining module if the current operating power of the each photovoltaic module is less than or equal to the branch maximum power. The maximum modification module is configured to modify the current operating power of the each photovoltaic module to the branch maximum power. The remaining module is configured to control the current operating power of the each photovoltaic module to remain unchanged.

In order to solve the above technical problems, an apparatus for controlling a photovoltaic inverter is further provided according to the present disclosure. The apparatus includes a memory and a processor. The memory is configured to store a computer program. The processor is configured to perform, when executing the computer program, the method for controlling a photovoltaic inverter described above.

In order to solve the above problems, a computer-readable storage medium storing a computer program is further provided according to the present disclosure. The computer program performs, when executed by a processor, the method for controlling a photovoltaic inverter described above.

With the method for controlling a photovoltaic inverter according to the present disclosure, both of the power of the photovoltaic inverter and a power of a photovoltaic chip in each of the branches are limited, so that it is only to determine whether an operating power of the photovoltaic chip is beyond a safety range without fixing the operating power. Compared with the conventional method for controlling a photovoltaic inverter, when same input energy is acquired, the maximum power of the photovoltaic inverter is acquired first, in order to avoid damage to the photovoltaic inverter. In addition, each of photovoltaic modules operates at an adjustable maximum power to acquire corresponding energy, so as to make full use of energy, thereby improving the operating power while ensuring the safety of the photovoltaic inverter and the modules.

The apparatus for controlling a photovoltaic inverter and the computer-readable storage medium according to the present disclosure correspond to the method for controlling a photovoltaic inverter described above, and have the same beneficial effects as the method.

### BRIEF DESCRIPTION OF THE DRAWINGS

In order to more clearly describe the embodiments of the present disclosure, drawings to be used in the embodiments are briefly introduced hereinafter. It is apparent that the drawings described below show merely the embodiments of the present disclosure, and those skilled in the art can obtain other drawings based on the provided drawings without any creative effort.

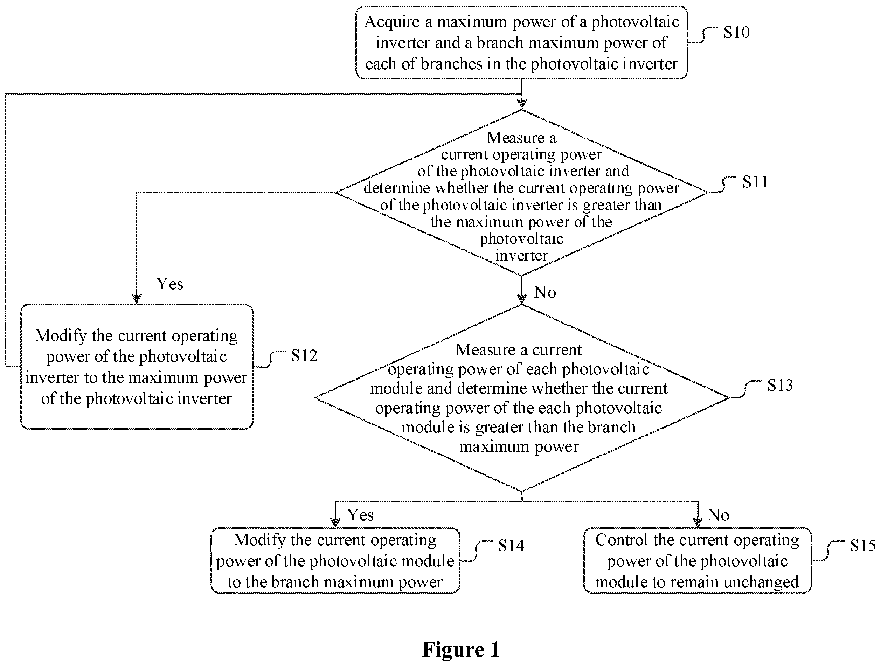

Figure 1 is a flowchart of a method for controlling a photovoltaic inverter according to an embodiment of the present disclosure;
Figure 2 is a schematic structural diagram of a system for controlling a photovoltaic inverter according to an embodiment of the present disclosure;
Figure 3 is a structural diagram of a photovoltaic inverter according to an embodiment of the present disclosure;
Figure 4 is a schematic diagram of a device for controlling a photovoltaic inverter according to an embodiment of the present disclosure; and
Figure 5 is a schematic diagram of an apparatus for controlling a photovoltaic inverter according to an embodiment of the present disclosure.

### DETAILED DESCRIPTION OF THE EMBODIMENTS

Technical solutions in the embodiments of the present disclosure are clearly and completely described below in conjunction with the drawings of the embodiments of the present disclosure. Apparently, the embodiments described below are only some embodiments of the present disclosure, rather than all the embodiments. Any other embodiments obtained by those skilled in the art based on the embodiments in the present disclosure without any creative effort fall within the protection scope of the present disclosure.

A method for controlling a photovoltaic inverter is provided according to the present disclosure to solve the problem described as follows. In a case that multiple modules are different in power, if a power of the photovoltaic inverter is limited by the maximum power of a single branch, the photovoltaic inverter always fails to operate at a maximum power; and if the power of the photovoltaic inverter is limited by the alternating current conversion circuit, when a power of one branch is very low, a power of another branch may exceed a safety threshold, resulting in damage to the circuit.

In order to enable those skilled in the art to better understand the solutions of the present disclosure, the present disclosure is further described in detail below in conjunction with the drawings and the embodiments. The method includes the following steps S10 to S15.

In step S 10, a maximum power of the photovoltaic inverter and a branch maximum power of each of branches in the photovoltaic inverter are acquired.

The inverter is a power conversion device and is formed by semiconductor devices. The inverter is configured to convert direct current power into alternating current power. The inverter generally includes a boost circuit and a bridge inverter circuit. The boost circuit is configured to increase a direct current voltage of a solar cell to a direct current voltage for output and control of the inverter. The bridge inverter circuit is configured to equivalently convert the increased direct current voltage into an alternating current voltage at a common frequency.

It can be understood that the maximum power of the photovoltaic inverter is a rated maximum power of the photovoltaic inverter, and the branch maximum power is a maximum power that can be withstood by a photovoltaic module in a branch. It should be noted that a power supply is implemented by a module formed by several cells that are connected in series and parallel, and tightly packaged, rather than being implemented by directly a single solar cell. The photovoltaic module (also known as a solar panel) is a core module of a solar power generation system and is the most important in the solar power generation system. The photovoltaic module is configured to convert solar energy into electric energy, and transmit the electric energy to a storage battery to store the electric energy or drive a load to operate. However, as micro inverters are applied, a current source of the photovoltaic module is directly converted into an alternating current source to drive electrical appliances for our life. In the embodiment, an operating power and a maximum power of the photovoltaic module in each of the branches is limited by the branch maximum power.

In step S 11, a current operating power of the photovoltaic inverter is measured and it is determined whether the current operating power of the photovoltaic inverter is greater than the maximum power of the photovoltaic inverter. The process proceeds to step S12 if the current operating power of the photovoltaic inverter is greater than the maximum power of the photovoltaic inverter, and the process proceeds to step S13 if the current operating power of the photovoltaic inverter is less than or equal to the maximum power of the photovoltaic inverter.

It should be noted that in this embodiment, a way to measure the current operating power of the photovoltaic inverter and a way to determine whether the current operating power of the photovoltaic inverter is greater than the maximum power of the photovoltaic inverter are not limited. A power of the photovoltaic inverter may be acquired by using a level signal.

In step S12, the current operating power of the photovoltaic inverter is modified to the maximum power of the photovoltaic inverter, and the process proceeds to step S 11.

It should be noted that in this embodiment, a way to modify the current operating power of the photovoltaic inverter is not limited. It can be understood that the current operating power of the photovoltaic inverter is generally modified by limiting a voltage, a current, or the like.

In step S13, a current operating power of each photovoltaic module is measured and it is determined whether the current operating power of the each photovoltaic module is greater than the branch maximum power. The process proceeds to step S14 if the current operating power of the each photovoltaic module is greater than the branch maximum power; or, the method proceeds to step S15 if the current operating power of the each photovoltaic module is less than or equal to the branch maximum power.

In step S14, the current operating power of the photovoltaic module is modified to the branch maximum power.

In step S15, the current operating power of the photovoltaic module remains unchanged.

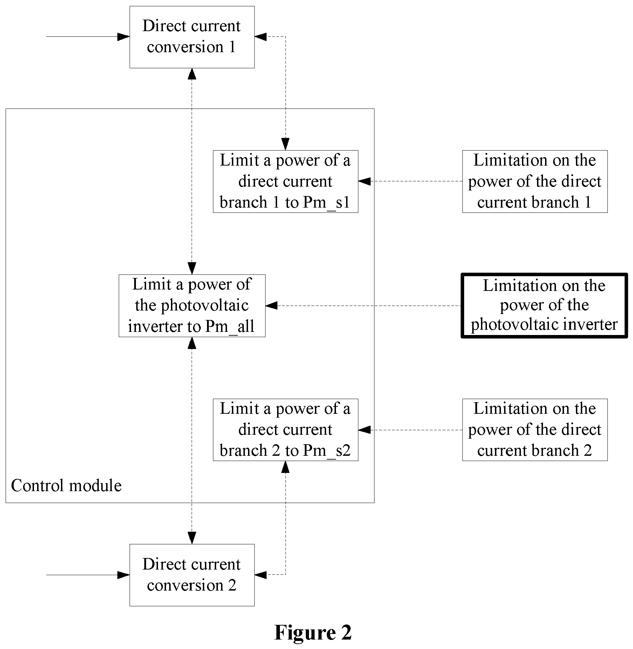

It should be noted that Figure 2 is a schematic structural diagram of a system for controlling a photovoltaic inverter according to an embodiment of the present disclosure. As shown in Figure 2, both of the power of the photovoltaic inverter and a power of a direct current branch corresponding to each of the photovoltaic modules are limited to ensure normal operation of the photovoltaic inverter. In this embodiment, the current operating power of the photovoltaic module is modified to the branch maximum power by modifying an input to the photovoltaic module. In this embodiment, the way to modify the operating power is not limited and detailed.

With the method for controlling a photovoltaic inverter according to the present disclosure, both of the power of the photovoltaic inverter and a power of a photovoltaic chip in each of the branches are limited, so that it is only to determine whether an operating power of the photovoltaic chip is beyond a safety range without fixing the operating power. Compared with the conventional method for controlling a photovoltaic inverter, when same input energy is acquired, the maximum power of the photovoltaic inverter is acquired first, in order to avoid damage to the photovoltaic inverter. In addition, each of photovoltaic modules operates at an adjustable maximum power to acquire corresponding energy, so as to make full use of energy, thereby improving the operating power while ensuring the safety of the photovoltaic inverter and the modules.

The way to modify the current operating power of the photovoltaic module is not limited in the above embodiments. A preferred solution is provided, in which the current operating power of the photovoltaic module is modified to the branch maximum power by: acquiring a current generated by the photovoltaic module and energy inputted by a photovoltaic effect, and calculating a current maximum power; and controlling a solar receiver of the photovoltaic module to limit energy acquired by the photovoltaic module and measuring the energy in a real time manner, until the time that the energy is less than a threshold.

It should be noted that in this embodiment, energy outputted by the photovoltaic module is reduced under control of the photovoltaic inverter, that is, the current operating power of the photovoltaic module is reduced. In a current limiting mode, the current operating power of the photovoltaic module is reduced by increasing a load corresponding to the photovoltaic module. A type of the photovoltaic module, the solar receiver and a photosensitive module are not limited.

A way to modify the operating power of the photovoltaic inverter to the maximum power of the photovoltaic inverter is not limited in the above embodiments. A preferred solution is provided, in which the current operating power of the photovoltaic inverter is modified to the maximum power of the photovoltaic inverter by: acquiring energy inputted by the photovoltaic effect and reducing the inputted energy to an energy threshold, where the energy threshold is pre-measured through the photovoltaic effect and ensures normal operation of the photovoltaic inverter.

It should be noted that the energy threshold described in this embodiment depends on a material and electronic components of the photovoltaic inverter. The energy threshold is generally set by a device or acquired in advance through experiments, and is not limited here.

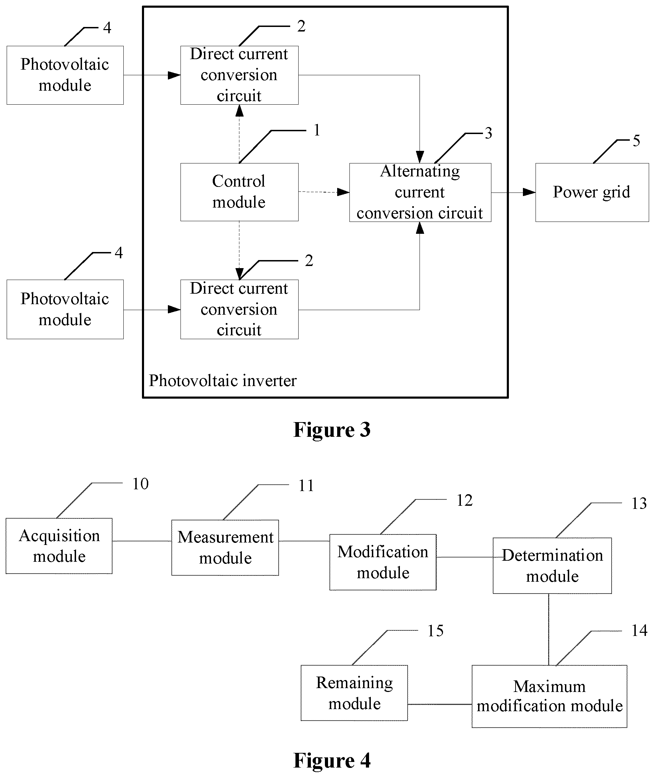

Figure 3 is a structural diagram showing energy transmission of a photovoltaic inverter according to an embodiment of the present disclosure. As shown in Figure 3, a preferred solution is provided based on the above embodiments. In the preferred solution, the photovoltaic modules transmit the energy generated by the photovoltaic effect to a power grid connected to the photovoltaic inverter through conversion between direct current and alternating current.

It should be noted that a whole formed by substations operating at various voltage levels and electricity transmission and distribution lines in a power system is referred to as the power grid. The power grid includes three units, namely a substation unit, a transmission unit and a distribution unit. In this embodiment, an operating mode of the photovoltaic inverter including multiple branches of photovoltaic modules is limited.

A way to calculate various types of power is not limited in the above embodiments. A preferred solution is provided here, in which the maximum power of the photovoltaic inverter, the rated maximum power, the current operating power of the photovoltaic module and the current operating power of the photovoltaic inverter are measured and calculated by an MCU.

The microcontroller unit (MCU) is also referred to as a single-chip microcomputer, which is a chip-level computer formed by appropriately reducing a frequency and a specification of a central processing unit and integrating peripheral interfaces such as a memory and a counter and even drive circuits into a single chip, for combined control in different application scenarios.

In order to deal with abnormal conditions of the photovoltaic modules in time, a preferred solution is provided, in which the method further includes: triggering an alarm when the current operating power of the photovoltaic inverter is greater than the maximum power of the photovoltaic inverter, and triggering an alarm when the current operating power of the photovoltaic module in one of the branches is greater than the branch maximum power.

In this embodiment, a device and a way for triggering an alarm are not limited. It can be understood that the alarm is triggered by an external component such as an indicator and a buzzer. Alternatively, the MCU sends to a user terminal, alarm information indicating that power is excess. It can be understood that the abnormal conditions may be caused by high power of the photovoltaic inverter or high power of the photovoltaic modules due to a device failure, an abnormal parameter, or other conditions, which are not limited here.

Figure 3 is a structural diagram of a photovoltaic inverter according to an embodiment of the present disclosure. As shown in Figure 3, the photovoltaic inverter includes a control module 1, multiple direct current conversion circuits 2 and an alternating current conversion circuit 3.

The control module 1 is connected to the direct current conversion circuits 2 and the alternating current conversion circuit 3. The control module 1 is configured to: acquire a maximum power of the photovoltaic inverter and a branch maximum power of each of branches in the photovoltaic inverter; measure a current operating power of the photovoltaic inverter and determine whether the current operating power of the photovoltaic inverter is greater than the maximum power of the photovoltaic inverter; modify the current operating power of the photovoltaic inverter to the maximum power of the photovoltaic inverter, and trigger functions of measuring a current operating power of the photovoltaic inverter and determining whether the current operating power of the photovoltaic inverter is greater than the maximum power of the photovoltaic inverter, if the current operating power of the photovoltaic inverter is greater than the maximum power of the photovoltaic inverter; or, measure a current operating power of each photovoltaic module 4 and determine whether the current operating power of the each photovoltaic module is greater than the branch maximum power, if the current operating power of the photovoltaic inverter is less than the maximum power of the photovoltaic inverter; and reduce the current operating power of the each photovoltaic module 4 to the branch maximum power if the current operating power of the each photovoltaic module is greater than the branch maximum power; or, control the current operating power of the each photovoltaic module 4 to remain unchanged if the current operating power of the each photovoltaic module is less than or equal to the branch maximum power.

The number of the direct current conversion circuits 2 is equal to the number of the photovoltaic modules 4. The direct current conversion circuits 2 are configured to convert energy from the photovoltaic modules 4 into direct current power. The alternating current conversion circuit 3 is connected to the direct current conversion circuits 2 and is configured to convert the direct current power from the direct current conversion circuits 2 into alternating current power and transmit the alternating current power to a power grid 5. All components in the direct current conversion circuits 2 and the alternating current conversion circuit 3 have a maximum allowed power greater than a rated power matching the current operating power of the photovoltaic inverter.

The photovoltaic inverter according to this embodiment corresponds to the method described above, and therefore the embodiments and beneficial effects of the photovoltaic inverter may refer to the embodiments and the beneficial effects of the method.

In the above embodiments, the method for controlling a photovoltaic inverter is described in detail. Embodiments of a device for controlling a photovoltaic inverter are further provided according to the present disclosure. It should be noted that embodiments of the device are described from two perspectives, that is, a perspective based on functional modules and a perspective based on hardware.

Figure 4 is a schematic diagram of a device for controlling a photovoltaic inverter according to an embodiment of the present disclosure. As shown in Figure 4, the device includes an acquisition module 10, a measurement module 11, a modification module 12, a determination module 13, a maximum modification module 14, and a remaining module 15.

The acquisition module 10 is configured to acquire a maximum power of the photovoltaic inverter and a branch maximum power of each of branches in the photovoltaic inverter. The maximum power of the photovoltaic inverter is a rated maximum power of the photovoltaic inverter, and the branch maximum power is a maximum power that can be withstood by a photovoltaic module in a branch.

The measurement module 11 is configured to measure a current operating power of the photovoltaic inverter, determine whether the current operating power of the photovoltaic inverter is greater than the maximum power of the photovoltaic inverter, and trigger the modification module if the current operating power of the photovoltaic inverter is greater than the maximum power of the photovoltaic inverter; or, trigger the determination module if the current operating power of the photovoltaic inverter is less than or equal to the maximum power of the photovoltaic inverter.

The modification module 12 is configured to modify the current operating power of the photovoltaic inverter to the maximum power of the photovoltaic inverter, and trigger the measurement module.

The determination module 13 is configured to measure a current operating power of each photovoltaic module and determine whether the current operating power of the each photovoltaic module is greater than the branch maximum power, and trigger the maximum modification module if the current operating power of the each photovoltaic module is greater than the branch maximum power; or, trigger the remaining module if the current operating power of the each photovoltaic module is less than or equal to the branch maximum power.

The maximum modification module 14 is configured to modify the current operating power of the each photovoltaic module to the branch maximum power.

The remaining module 15 is configured to control the current operating power of the each photovoltaic module to remain unchanged.

Preferably, the device further includes an injection module.

The injection module is configured to continuously perform transient control on the conversion circuits and inject ripples into an I2C signal, to test influences of the ripples with different amplitudes on a to-be-detected device.

Since the embodiments of the device correspond to the embodiments of the method, the embodiments and beneficial effects of the device may refer to the embodiments of the method, and thus are not repeated here.

With the device for controlling a photovoltaic inverter according to the embodiment, both of the power of the photovoltaic inverter and the power of the photovoltaic chip in each branch are limited, so that it is only to determine whether an operating power of the photovoltaic chip is beyond a safety range without fixing the operating power. Compared with the conventional method for controlling a photovoltaic inverter, when same input energy is acquired, the maximum power of the photovoltaic inverter is acquired first, in order to avoid damage to the photovoltaic inverter. In addition, each of photovoltaic modules operates at an adjustable maximum power to acquire corresponding energy, so as to make full use of energy, thereby improving the operating power while ensuring the safety of the inverter and the modules.

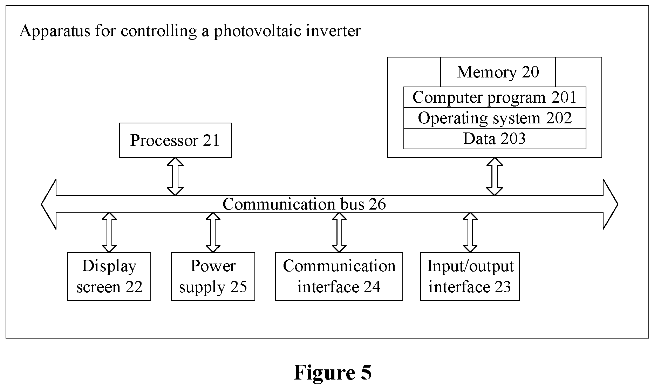

Figure 5 is a structural diagram of an apparatus for controlling a photovoltaic inverter according to another embodiment of the present disclosure. As shown in Figure 5, the apparatus for controlling a photovoltaic inverter includes a memory 20 and a processor 21.

The memory 20 is used to store a computer program. The processor 21 is configured to perform, when executing the computer program, the method for controlling a photovoltaic inverter described in the above embodiments.

The apparatus for controlling a photovoltaic inverter according to the embodiment includes but is not limited to a smart phone, a tablet, a laptop, a desktop computer or the like.

The processor 21 may include one or more processing cores, such as a 4-core processor, an 8-core processor, or the like. The processor 21 may be implemented in at least one hardware form of a digital signal processor (DSP), a field-programmable gate array (FPGA), and a programmable logic array (PLA). The processor 21 may include a main processor and a coprocessor. The main processor is configured to process data in a wake-up state, and is also referred to as a central processing unit (CPU). The coprocessor is a low-power processor for processing data in a standby state. In some embodiments, the processor 21 may be integrated with a graphics processing unit (GPU), and the GPU is responsible for rendering and drawing contents to be displayed on a display screen. In some embodiments, the processor 21 may further include an artificial intelligence (AI) processor configured to perform a calculation operation related to machine learning.

The memory 20 may include one or more computer-readable storage media. The computer-readable storage medium may be non-transient. The memory 20 may further include a high-speed random access memory and a non-volatile memory, such as one or more magnetic disk storage devices and one or more flash memory storage devices. In this embodiment, the memory 20 is at least used to store the following computer program 201. The computer program is loaded and executed by the processor 21 to implement the method for controlling a photovoltaic inverter according to any one of the above embodiments. In addition, the memory 20 may further store an operating system 202, data 203, and other resources in a temporary manner or a permanent manner. The operating system 202 may include Windows, Unix, Linux, and the like. The data 203 may include but is not limited to data involved in the method for controlling a photovoltaic inverter described above.

In some embodiments, the apparatus for controlling a photovoltaic inverter may further include a display screen 22, an input/output interface 23, a communication interface 24, a power supply 25, and a communication bus 26.

It should be understood by those skilled in the art that the structure shown in Figure 5 does not intend to constitute a limitation on the apparatus for controlling a photovoltaic inverter, and more or fewer components may be included in the apparatus.

The apparatus for controlling a photovoltaic inverter according to the embodiments of the present disclosure includes a memory and a processor. The processor is configured to perform, when executing a program stored in the memory, the method for controlling a photovoltaic inverter described in the above embodiments.

The apparatus for controlling a photovoltaic inverter according to the present disclosure includes a memory and a processor. The processor executes the program stored in the memory to achieve beneficial effects as follows. Both of the power of the photovoltaic inverter and a power of a photovoltaic chip in each branch are limited, so that it is only to determine whether an operating power of the photovoltaic chip is beyond a safety range without fixing the operating power. Compared with the conventional method for controlling a photovoltaic inverter, when same input energy is acquired, the maximum power of the photovoltaic inverter is acquired first, in order to avoid damage to the photovoltaic inverter. In addition, each of photovoltaic modules operates at an adjustable maximum power to acquire corresponding energy, so as to make full use of energy, thereby improving the operating power while ensuring the safety of the photovoltaic inverter and the modules.

Since the embodiments of the apparatus correspond to the embodiments of the method, the embodiments and beneficial effects of the apparatus may refer to the embodiments of the method, and thus are not repeated here.

A computer-readable storage medium is further provided according to an embodiment of the present disclosure. The computer-readable storage medium stores a computer program that performs, when executed by a processor, the method described in the above embodiments.

It should be understood that if the method in the above embodiments is implemented in a form of a software functional unit and is sold and used as an independent product, the software functional unit may be stored in a computer-readable storage medium. Base on such understanding, the technical solutions according to the present disclosure essentially or the part that contributes to the conventional technology, or all or a part of the technical solutions may be embodied in a form of a software product. The computer software product is stored in a storage medium and performs all or part of steps of the method described in the above embodiments of the present disclosure. The storage medium includes various media that can store program codes, such as a U disk, a mobile hard disk, a read-only memory (ROM), a random access memory (RAM), a magnetic disk, or an optical disk.

Since the embodiments of the readable storage medium correspond to the embodiments of the method, the embodiments of the apparatus may refer to the embodiments of the method and thus are not repeated here.

The computer-readable storage medium according to the present disclosure is executed by a computer program to achieve beneficial effects as follows. Both of the power of the photovoltaic inverter and a power of a photovoltaic chip in each branch are limited, so that it is only to determine whether an operating power of the photovoltaic chip is beyond a safety range without fixing the operating power. Compared with the conventional method for controlling a photovoltaic inverter, when same input energy is acquired, the maximum power of the photovoltaic inverter is acquired first, in order to avoid damage to the photovoltaic inverter. In addition, each of photovoltaic modules operates at an adjustable maximum power to acquire corresponding energy, so as to make full use of energy, thereby improving the operating power while ensuring the safety of the photovoltaic inverter and the modules.

The method and the device for controlling a photovoltaic inverter, and a computer-readable storage medium according to the present disclosure are described in detail above. The embodiments in this specification are described in a progressive manner. Each of the embodiments is focused on describing its differences from other embodiments, and references may be made among these embodiments with respect to the same or similar parts. Since the devices disclosed in the embodiments corresponds to the method disclosed in the embodiments, the description for the device is simple, and reference may be made to the method in the embodiment for the relevant parts. It should be noted that, for those skilled in the art, various modifications and improvements may be made to the present disclosure without departing from the principle of the present disclosure, and these modifications and improvements fall into the protection scope of the present disclosure.

It should further be noted that relationship terms such as first, second and the like are only used herein to distinguish one entity or operation from another, instead of necessitating or implying such actual relationship or order between entities or operations. Furthermore, terms "include", "comprise" or any other variants thereof are intended to be non-exclusive. Therefore, a process, method, article or device including a series of elements includes not only the elements but also other elements that are not enumerated or other elements inherent to such process, method, article or device. Unless expressively limited otherwise, a process, method, article or device limited by "comprising/including a(n)..." does not exclude existence of another identical element in such process, method, article or device.

## Claims

1. A method for controlling a photovoltaic inverter, applied to the photovoltaic inverter comprising a plurality of branches, wherein the method comprises:
acquiring a maximum power of the photovoltaic inverter and a branch maximum power of each of the plurality of branches in the photovoltaic inverter;
measuring a current operating power of the photovoltaic inverter and determining whether the current operating power of the photovoltaic inverter is greater than the maximum power of the photovoltaic inverter;
modifying the current operating power of the photovoltaic inverter to the maximum power of the photovoltaic inverter, and returning to the step of measuring a current operating power of the photovoltaic inverter and determining whether the current operating power of the photovoltaic inverter is greater than the maximum power of the photovoltaic inverter, if the current operating power of the photovoltaic inverter is greater than the maximum power of the photovoltaic inverter; or, measuring a current operating power of each photovoltaic module and determining whether the current operating power of the each photovoltaic module is greater than the branch maximum power, if the current operating power of the photovoltaic inverter is less than the maximum power of the photovoltaic inverter; and
modifying the current operating power of the each photovoltaic module to the branch maximum power if the current operating power of the each photovoltaic module is greater than the branch maximum power; or, controlling the current operating power of the each photovoltaic module to remain unchanged if the current operating power of the each photovoltaic module is less than or equal to the branch maximum power.

2. The method for controlling a photovoltaic inverter according to claim 1, wherein the modifying the current operating power of the each photovoltaic module to the branch maximum power comprises:
acquiring a current generated by the photovoltaic module and energy inputted by a photovoltaic effect, and calculating a current maximum power; and
modifying a current outputted by the photovoltaic module to limit the energy outputted by the photovoltaic module and measuring the energy in a real time manner, until the time that the energy is less than a threshold.

3. The method for controlling a photovoltaic inverter according to claim 1, wherein the modifying the current operating power of the photovoltaic inverter to the maximum power of the photovoltaic inverter comprises:
acquiring energy inputted by a photovoltaic effect and reducing the inputted energy to an energy threshold, wherein the energy threshold is pre-measured through the photovoltaic effect and ensures normal operation of the photovoltaic inverter.

4. The method for controlling a photovoltaic inverter according to claim 3, wherein the photovoltaic modules transmit the energy generated by the photovoltaic effect to a power grid connected to the photovoltaic inverter through conversion between direct current and alternating current.

5. The method for controlling a photovoltaic inverter according to claim 3, wherein the maximum power of the photovoltaic inverter, a rated maximum power, the current operating power of the photovoltaic module and the current operating power of the photovoltaic inverter are measured and calculated by an MCU.

6. The method for controlling a photovoltaic inverter according to claim 5, further comprising:
triggering an alarm when the current operating power of the photovoltaic inverter is greater than the maximum power of the photovoltaic inverter; and
triggering an alarm when the current operating power of the photovoltaic module in one of the plurality of branches is greater than the branch maximum power.

7. A photovoltaic inverter, comprising:
a control module;
a plurality of direct current conversion circuits; and
an alternating current conversion circuit,
wherein, the control module is connected to the plurality of direct current conversion circuits and the alternating current conversion circuit, and is configured to:
acquire a maximum power of the photovoltaic inverter and a branch maximum power of each of branches in the photovoltaic inverter;
measure a current operating power of the photovoltaic inverter and determine whether the current operating power of the photovoltaic inverter is greater than the maximum power of the photovoltaic inverter;
modify the current operating power of the photovoltaic inverter to the maximum power of the photovoltaic inverter, and trigger functions of measuring a current operating power of the photovoltaic inverter and determining whether the current operating power of the photovoltaic inverter is greater than the maximum power of the photovoltaic inverter, if the current operating power of the photovoltaic inverter is greater than the maximum power of the photovoltaic inverter; or, measure a current operating power of each photovoltaic module and determine whether the current operating power of the each photovoltaic module is greater than the branch maximum power, if the current operating power of the photovoltaic inverter is less than the maximum power of the photovoltaic inverter; and
reduce the current operating power of the each photovoltaic module to the branch maximum power if the current operating power of the each photovoltaic module is greater than the branch maximum power; or, control the current operating power of the each photovoltaic module to remain unchanged if the current operating power of the each photovoltaic module is less than or equal to the branch maximum power,
wherein, the number of the plurality of direct current conversion circuits is equal to the number of the photovoltaic modules, the direct current conversion circuits are configured to convert energy from the photovoltaic modules into direct current power, the alternating current conversion circuit is connected to the direct current conversion circuits and is configured to convert the direct current power in the direct current conversion circuits into alternating current power and transmit the alternating current power to a power grid, and all components in the direct current conversion circuits and the alternating current conversion circuit have a maximum allowed power greater than a rated power matching the current operating power of the photovoltaic inverter.

8. A device for controlling a photovoltaic inverter, comprising an acquisition module, a measurement module, a modification module, a determination module, a maximum modification module and a remaining module, wherein
the acquisition module is configured to acquire a maximum power of the photovoltaic inverter and a branch maximum power of each of branches in the photovoltaic inverter;
the measurement module is configured to measure a current operating power of the photovoltaic inverter, determine whether the current operating power of the photovoltaic inverter is greater than the maximum power of the photovoltaic inverter, and trigger the modification module if the current operating power of the photovoltaic inverter is greater than the maximum power of the photovoltaic inverter; or, trigger the determination module if the current operating power of the photovoltaic inverter is less than or equal to the maximum power of the photovoltaic inverter;
the modification module is configured to modify the current operating power of the photovoltaic inverter to the maximum power of the photovoltaic inverter, and trigger the measurement module;
the determination module is configured to measure a current operating power of each photovoltaic module and determine whether the current operating power of the each photovoltaic module is greater than the branch maximum power, and trigger the maximum modification module if the current operating power of the each photovoltaic module is greater than the branch maximum power; or, trigger the remaining module if the current operating power of the each photovoltaic module is less than or equal to the branch maximum power;
the maximum modification module is configured to modify the current operating power of the each photovoltaic module to the branch maximum power; and
the remaining module is configured to control the current operating power of the each photovoltaic module to remain unchanged.

9. An apparatus for controlling a photovoltaic inverter, comprising:
a memory, configured to store a computer program; and
a processor, configured to perform, when executing the computer program, the method for controlling a photovoltaic inverter according to any one of claims 1 to 7.

10. A computer-readable storage medium storing a computer program, wherein
the computer program performs, when executed by a processor, the method for controlling a photovoltaic inverter according to any one of claims 1 to 7.
